Europäisches Patentamt

European Patent Office

Office européen des brevets

(11) Veröffentlichungsnummer: **0 280 896**
**A2**

(12) # EUROPÄISCHE PATENTANMELDUNG

(21) Anmeldenummer: **88101521.8**

(22) Anmeldetag: **03.02.88**

(51) Int. Cl.⁴: **F16H 57/02**

(30) Priorität: **24.02.87 DE 3705812**

(43) Veröffentlichungstag der Anmeldung:
**07.09.88 Patentblatt 88/36**

(84) Benannte Vertragsstaaten:
**BE GB IT**

(71) Anmelder: **A. FRIEDR. FLENDER AG**
**Alfred-Flender-Strasse 77 Postfach 139**
**D-4290 Bocholt(DE)**

(72) Erfinder: **Hellerhoff, Josef, Dipl.-Ing.**
**Thonhausenstrasse 3**
**D-4290 Bocholt(DE)**
Erfinder: **Te Beest, Hans**
**Marijkestraat 2**
**NL-7091 AN Dinxperlo(NL)**

(54) **Zahnradgetriebereihe.**

(57) Die Erfindung betrifft eine Zahnradgetriebereihe
für mehrstufige Zahnradgetriebe mit steigenden Abtriebsdrehmomenten bestehend aus beliebig vielen
Zahnradgetrieben, deren Achsabstandssprünge einer
mathematischen Reihe entsprechen. Die Neuerung
besteht darin, daß jede zweite, eventuell auch dritte
Getriebegröße der vorhergehenden Getriebegröße
bis auf den Durchmesser des Endstufenrades und
damit auch den Endstufenachsabstand entspricht.
Da bei diesen in die Reihe eingeschobenen Getriebegrößen nur die Durchmesser der Endstufenräder
und die Achsabstände der Endstufen größer sind als
beim jeweiligen vorhergehenden Getriebe, sind unter
Beibehaltung der Mehrzahl der Getriebeinnenteile
jeweils größere Abtriebsdrehmomente möglich.
Damit wird eine feinere Stufung der Abtriebsdrehmomente der gesamten Reihe erzielt.

Fig.2

EP 0 280 896 A2

## Zahnradgetriebereihe

Die Erfindung betrifft eine Zahnradgetriebereihe für mehrstufige Zahnradgetriebe mit steigenden Abtriebsdrehmomenten, gemäß dem Oberbegriff des Anspruches 1.

Das Abtriebsdrehmoment eines mehrstufigen Getriebes wird zweckmäßigerweise durch das Zahnradpaar mit dem größten Achsabstand bestimmt. Üblicherweise stehen die größten Achsabstände aller Getriebe einer Zahnradgetriebereihe in einer bestimmten Beziehung zu den Gliedern einer mathematischen Reihe. Die kleineren Achsabstände dieser Getriebe stehen in der gleichen Beziehung zu dieser mathematischen Reihe. Dieses hat aber zur Folge, daß bei den größeren Getriebegrößen die Abstufung der Abtriebsdrehmomente ungewünscht grob wird, will man nicht eine Vielzahl von Getriebegrößen und damit eine Vielzahl von Getriebeteile zulassen.

Aus DE-PS 2061021 ist bekannt, die Abstufung entsprechend den Gliedern einer mathematischen Reihe vorzunehmen, deren Stufensprung und damit Abtriebsdrehmomentsprung bei größer werdenden Getrieben einem immer kleiner werdenden Faktor entspricht. Hierdurch kann erreicht werden, daß bei den größeren Getrieben die Drehmomentsprünge nicht zu groß werden. Dieses wird dadurch erreicht, daß entweder mehr Getriebegrößen vorgesehen werden mit entsprechend vielen Einzelteilen oder die Abstufung bei den kleineren Getrieben nicht optimal gewählt wird.

Der Erfindung liegt die Aufgabe zu Grunde, eine Zahnradgetriebereihe für mehrstufige Zahnradgetriebe aufzustellen, bei der bei optimaler Ausnutzung der Bauteile möglichst wenig Innenteilvarianten erforderlich sind.

Diese Aufgabe wird durch die im Kennzeichen des Anspruches 1 und 2 angegebenen Merkmale gelöst. Danach stehen die Achsabstände und damit auch die Abtriebsdrehmomente aufeinander folgender Getriebegrößen in einem der Reihe entsprechenden Verhältnis zueinander. Um den Drehmomentsprung von einer Größe zur anderen entsprechend der zuvor beschriebenen Zahnradgetriebereihe nicht zu groß werden zu lassen, ist es vorgesehen, jeweils eine Sondergetriebegröße zwischenzuordnen, die vom kleineren Getriebe ausgeht und bei dem lediglich das Abtriebszahnrad und damit auch der Endachsabstand vergrößert wird. Hierdurch können unter Beibehaltung der vorderen Getriebestufen einschließlich des Ritzels der letzten Stufe die Abtriebsdrehmomente dieser Getriebe beträchtlich erhöht werden. Durch die Vergrößerung des Abtriebszahnrades wird auch die Übersetzung in der letzten Stufe vergrößert, so daß mit diesen Getrieben ein größeres Gesamtübersetzungsverhältnis realisiert werden kann, was in speziellen Fällen dazu führt, daß ein Getriebe mit einer geringeren Stufenzahl erforderlich wird.

Das vorgestellte Getriebereihenkonzept erfordert bei einer feinen Abstufung der Abtriebsdrehmomente eine wesentlich verminderte Anzahl unterschiedlicher Getriebeinnenteile, wodurch die Fertigungslosgrößen erheblich vergrößert und die Vorratshaltung kostenmäßig reduziert wird. Dieses fällt besonders bei drei und mehrstufigen Getrieben ins Gewicht.

Des weiteren kann auch jede zweite und dritte Getriebegröße einer Reihe von dem nächst kleineren Getriebe der ursprünglichen Reihe in der Weise abgeleitet werden, daß lediglich das Abtriebszahnrad entsprechend größer ausgeführt wird. Dadurch vermindern sich noch mal die benötigten Getriebeinnenteile für eine Zahnradgetriebereihe. Dieses ist besonders vorteilhaft bei Getrieben mit hohen Abtriebsmomenten wegen der hohen Kosten. Bei dieser Reihe erhöht sich auch noch einmal die Gesamtübersetzung bei dem Getriebe mit dem größten Endachsabstand. Natürlich ist es auch möglich, noch mehr als 2 Getriebegrößen mit entsprechend vergrößertem Endachsabstand zwischen die Getriebe der Ausgangsreihe zu - schieben, insbesondere bei hohen Abtriebsdrehmomenten, so daß eine noch feinere Abstufung der Abtriebsdrehmomentsprünge vorgenommen werden kann.

Es hat sich als vorteilhaft herausgestellt, bei einer Getriebegröße der zuvor beschriebenen Zahnradgetriebereihe bei Übersetzungsänderungen nur die Zahnräder der erste Stufe zu ändern und alle nachgeschalteten Zahnradstufen immer gleich zu halten. Reicht die so erzielbare Übersetzung nicht mehr aus, so ist auf ein Getriebe mit einer entsprechend geänderten Stufenzahl überzugehen. Somit kommen besonders bei vielstufigen Getrieben immer die gleichen Zahnräder und Innenteile zum Einsatz, wodurch ein Minimum an Innenteilvarianten benötigt wird.

Die Erfindung wird an Hand der Zeichnung näher erläutert. Es zeigen:

Fig. 1 eine schematische Zahnradanordnung eines dreistufigen Getriebes entsprechend einer Reihe mit den Achsabständen $a_1$, $a_2$ und $a_3$;

Fig. 2 eine schematische Zahnradanordnung eines dreistufigen Getriebes entsprechend Fig. 1 mit vergrößertem Endachsabstand $a_3'$;

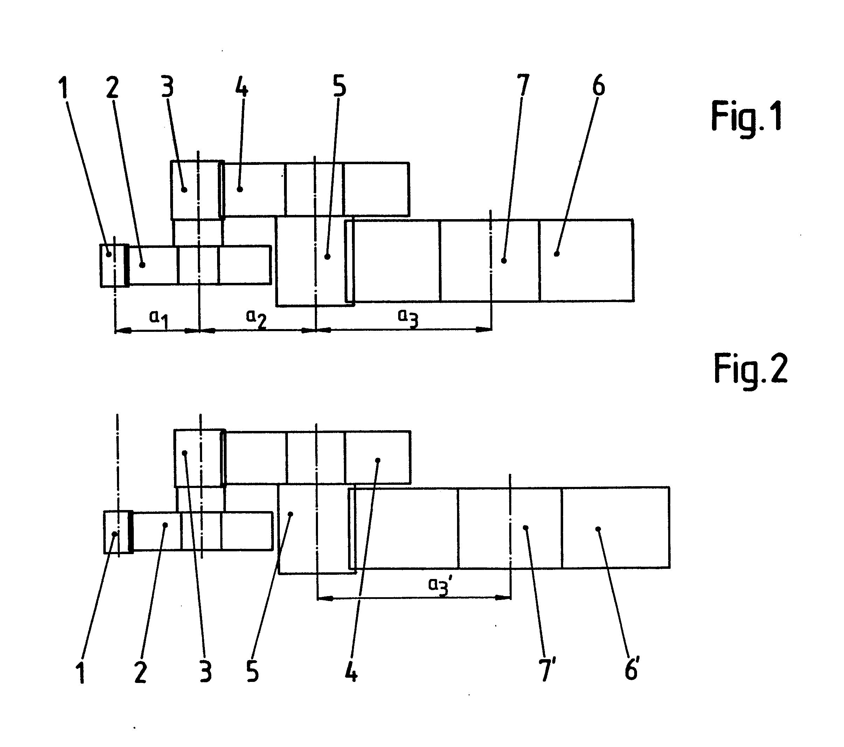

In Fig. 1 ist eine schematische Zahnradanordung eines dreistufigen Getriebes angegeben, welches einer Getriebereihe zuzuordnen ist. Dabei wird die erste Stufe von dem Ritzel 1 und dem Zahnrad 2 mit dem Achsabstand $a_1$ gebildet. Die zweite Stufe wird von dem Ritzel 3 und dem Zahnrad 4 mit dem Achsabstand $a_2$ gebildet. Die dritte Stufe wird von dem Ritzel 5 und dem Endstufenrad 6 mit dem Achsabstand $a_3$ gebildet. Die Achsabstände $a_1$, $a_2$ und $a_3$ sind dabei Glieder einer gemeinsamen Reihe. Somit können die Zahnräder 1, 2, 3, 4, 5 und 6 auch in Getrieben Anwendung finden, die zu dem gleichen Baukastensystem gehören. Dabei können es auch Getriebe mit nur zwei Stufen als auch mit vier und mehr Stufen sein. Somit können alle Getriebeinnenteile mehrfach Verwendung finden.

In Fig. 2 ist ebenfalls eine schematische Getriebeanordnung eines dreistufigen Getriebes angegeben, welches bis auf das Endstufenrad 6' und den dazugehörigen Achsabstand $a_3$' mit der in Fig. 1 dargestellten Getriebeanordnung identisch ist. Das Zahnrad 6' ist größer im Durchmesser als das Zahnrad 6 in Fig. 1, so daß auch der Achsabstand $a_3$' entsprechend größer ist als $a_3$. Das Zahnrad 6' kämmt mit dem gleichen Ritzel 5 wie bei dem Getriebe in Fig. 1, ist also auf dessen Verzahnung abgestimmt und weist die gleiche Zahnradbreite auf. Somit liegt das Zahnrad 6' außerhalb der Reihe, der die Zahnräder 1 bis 5 zuzuordnen sind. Das Getriebe nach Fig. 2 kann ein größeres Drehmoment übertragen als das Getriebe nach Fig. 1, da der Zahndruck des Ritzels 5 auf einen größeren Hebelarm wirkt. Dadurch, daß das Zahnrad 6' größer ist als Zahnrad 6 kann mit dem Getriebe nach Fig. 2 auch eine entsprechend größere übersetzung realisiert werden. Ein nach Fig. 2 ausgebildetes Getriebe ist in der aufsteigenden Reihe hinter einem Getriebe nach Fig. 1 einzuordnen. Durch den Austausch eines einzigen Rades konnte hier eine größere Getriebegröße geschaffen werden. Unter dem Begriff "Getriebegröße" ist ein Getriebe mit einem bestimmten Endstufenachsabstand zu verstehen.

Es ist auch denkbar, daß das Endstufenrad 6' eine abermalige Vergrößerung im Durchmesser erfährt, so daß hierdurch bei Bedarf eine weitere Getriebegröße, ebenfalls durch den Austausch eines einzigen Zahnrades, natürlich mit entsprechend größerem Endachsabstand $a_3$', geschaffen werden kann.

Um das Übersetzungsverhältnis der Getriebe nach Fig. 1 und 2 zu ändern, ist es vorgesehen, lediglich die erste Stufe mit dem Ritzel 1 und dem Rad 2 entsprechend auszutauschen. Sollte hierdurch die gewünschte Übersetzung nicht erzielbar sein, so ist auf ein Getriebe mit geringerer bzw. größerer Stufenzahl überzugehen.

Da das Endstufenrad 6' ein größeres Drehmoment übertragen kann als das Endstufenrad 6, kann dieses mit einer größeren Bohrung 7' versehen werden, so daß auch eine im Durchmesser vergrößter Abtriebswelle mit entsprechender Lagerung vorgesehen werden kann.

## Ansprüche

1. Zahnradgetriebereihe für mehrstufige Zahnradgetriebe mit steigenden Abtriebsdrehmomenten, bestehend aus beliebig vielen Getriebegrößen, wobei die Achsabstandssprünge einer mathematischen Reihe entsprechen, dadurch gekennzeichnet, daß jede zweite Getriebegröße der Zahnradgetriebereihe der nächst kleineren Getriebegröße entspricht, aber dessen Endstufenrad (6') bei gleicher Zahnbreite und auf das Endstufenritzel (5) angepaßter Verzahnung größer im Durchmesser ist als das Endstufenrad (6) der vorhergehenden Getriebegröße.

2. Zahnradgetriebereihe nach Anspruch 1, dadurch gekennzeichnet, daß auch jede dritte Getriebegröße einer Zahnradgetriebereihe der um zwei Sprünge kleineren Getriebegröße entspricht, aber dessen Endstufenrad (6') bei gleicher Zahnbreite und auf das Entstufenritzel (5) angepaßter Verzahnung größer im Durchmesser ist als das Endstufenrad der vorhergehenden Getriebegröße.

3. Zahnradgetriebereihe nach Anspruch 1 oder 2, dadurch gekennzeichnet, daß die Getriebegrößen mit vergrößertem Endstufenrad (6') auch eine im Durchmesser vergrößerte Abtriebswelle aufweisen.

4. Zahnradgetriebereihe nach wenigstens einem der vorhergehenden Ansprüche, dadurch gekennzeichnet, daß bei einer Getriebegröße die Zahnräder (3, 4, 5, 6, 6') der zweiten und aller weiteren Getriebestufen unabhängig von der Getriebegesamtübersetzung immer gleich sind.

Fig.1

Fig.2

0 280 896